# EUROPEAN PATENT SPECIFICATION

(11) **EP 0 993 747 B1**
(45) Date of publication and mention of the grant of the patent: **16.03.2005**
(21) Application number: 98932401.7
(22) Date of filing: 09.07.1998
(51) Int. Cl.: H04Q 7/32

(54) **SUBSCRIBER SYSTEM WITH USER STATION WITH REMOVABLE DATA STORE**
TEILNEHMER-SYSTEM MIT VERBRAUCHERSTATION MIT ENTNEHMBAREM DATENSPEICHER
SYSTEME D'ABONNES A STATION UTILISATEUR DOTEE D'UNE MEMOIRE DE DONNEES AMOVIBLE

(30) Priority: 18.07.1997 GB 9715243
(43) Date of publication of application: 19.04.2000
(60) Divisional application: 04002494.5
(73) Proprietor: ORANGE PERSONAL COMMUNICATIONS SERVICES LIMITED, Almondsbury, Bristol BS12 4QJ (GB)
(72) Inventor: GREEN, Mark, North Somerset BS24 9XB (GB)
(74) Representative: Spaargaren, Jerome
(86) International application number: PCT/GB1998/002011
(87) International publication number: WO 1999/004587

(56) References cited:
- EP-A- 0 685 972
- EP-A- 0 781 065
- WO-A-95/28062
- WO-A-96/35304
- WO-A-96/36194

## Description

This invention relates to a method of operating user stations in a subscriber system, the user stations being adapted for use with removable data score, such as a subscriber identity module (SIM) as used in a GSM (Global System for Mobile communications) digital cellular radio system, and to such a data store.

In a known conventional GSM system, each subscriber is provided with a SIM, also referred to as a smart card, which is inserted into a user station, such as a mobile telephone handset, in order to allow the subscriber to receive service in a GSM network with the user station.

The SIM holds various permanent data records, such as a record of the international mobile subscriber identity (IMSI) whereby the subscriber is recognised, and a record of an authentication key whereby the subscriber is authenticated by a mobile communicacions network. The SIM also holds various other subscriber-specific data records, some of which are modifiable.

The SIM format and the SIM/user station interface are standardised such that a SIM may be placed in any of a number of different user stations in order to obtain service in a GSM network. This has the advantage of allowing the SIM to be readily transportable between user stations, but various disadvantages accrue.

Some mobile network operators subsidise the initial cost of a user station for use in their own network. However, since it is possible to transport a SIM from a user station intended for use on one network to a user station intended for use on another, subsidies provided by one network operator have been used to the benefit of a different network operator.

Furthermore, a user station into which a SIM is placed may be stolen. It has in the past been possible to obtain service on a network using a stolen user station.

A number of mechanisms are known which allow a user station to be "latched" to a SIM, which are generally derived from GSM Technical Specification 02.22. The latching is performed on the first valid SIM which is inserted into the user station. The latching, which is intended to prevent operation of the user station with a different SIM, is permanent until a predetermined unlatching code is entered in the user station, after which time the latching function is permanently disabled. These types of latching mechanism rely on the security of the software provided in the user station, which can occasionally be circumvented by a determined fraudster.

There are also known network-based mechanisms for barring users of stolen user stations. A GSM network operator may maintain an equipment identity register (EIR), which holds a list of international mobile equipment identities (IMEIs) and their associated status. The EIR may hold a black list of IMEIs for user stations which should be barred, for example because the user stations are stolen. However, this mechanism requires the network operator to first be notified of a stolen user station, and then to make a decision whether or not to positively bar the user station from the network.

EP-A-0675659 describes a "self-disabling" device for a mobile user station. The network operator compiles a list of IMEIs of stolen user stations and broadcasts the list in the network. A user station stores the list of stolen IMEIs in a buffer memory, and compares the IMEI of the user station with each of the IMEIs on the stored list. If the IMEI of the user station corresponds with an item on the stored list, the user station transmits a message to the network indicating that the user station is being disabled, and then proceeds to disable the transmitter of the user station. Again, this mechanism requires the network operator to be aware of the identities of stolen mobile stations, and to make a barring decision when placing the IMEI on the list broadcast in the network.

International patent application PCT/FI96/00266, publication number WO 96/36194, describes an authentication method whereby the identity of the subscriber equipment is transmitted to an authentication system operating at the network level. The authentication system compares the transmitted identity with that stored for the subscriber, and, in the event that the compared identities are different and the transmitted identity is not validated by the network, the authentication system invokes procedures for disabling or restricting access of the subscriber equipment (the identity is added to a blacklist). A disadvantage of this method is that it only works if and when the subscriber is communicating with the network system. In addition, the network system does not store or monitor correspondences between the subscriber equipment identity and the subscriber identity stored in a subscriber module (SIM). Thus any equipment that is not blacklisted will be usable with any particular SIM.

International patent application PCT/FI96/00236, publication number WO 96/35304, describes an authentication method whereby the identity of either the subscriber equipment or subscriber module (SIM) are compared by an authentication system operating at the subscriber equipment level. In a first arrangement, the identity of the subscriber equipment last used in conjunction with the SIM is stored in the SIM. In a second arrangement, the identity of the SIM last used in conjunction with the subscriber equipment is stored in the subscriber equipment. In either methods, when the subscriber equipment is powered on, the authentication system operating on the subscriber equipments or the SIM compares the two identities. In the event that the identities are different, the subscriber equipment contacts the network system, and if the new identity is authenticated the new identity is stored by the SIM or subscriber equipment (depending on whether it is operating in accordance with the first or second arrangement). The subscriber equipment thereafter continues to operate as normal. A problem with this is that any changes to the authentication procedure have to be effected on the mobile equipment, which is typically not directly accessible by the network operator. In addition, there can be a significant variation in operating characteristics between different types of user stations, so that implementing such changes are difficult at best and impossible at worst.

In accordance with one aspect of the present invention there is provided a method of operating user stations in a subscriber system, said method comprising: providing a subscriber with a removable data store which is for insertion into any of a plurality of user stations, said removable data store assuming a first operative state, and monitoring with said removable data store the identity of a user station in which said removable data store is currently inserted, characterised by said removable store being adapted to store data defining a plurality of user stations that are intended for use in combination with said removable data store; and arranging said removable data store to store data defining a set of two or more user stations which are intended for use in combination with said removable data store; wherein said removable data store reconfiguring itself into a second operative state in response to said removable data store recognising that the user station in which the removable data store is inserted is not a member of said set defined for the removable data store, said reconfiguring step preventing said user station being used to obtain normal service in said system.

This aspect allows a predefined set of user stations to be associated with each data store, and action to be taken in the data store automatically when the data store is inserted into a user station which does not appear in that predefined set. Such action may consist of any of a number of options, including overwriting the operator name string held in the data store, so that a predefined message such as "dial operator" appears in place of the operator name on the display of the user station, activating a fixed dialling list function in the user station to prevent calls being made to any dialling number except for one or more predefined dialling numbers, and/or overwriting records in the data store which are necessary to obtain service in the network.

The defining data may identify user stations individually (in a GSM-type system, by means of their IMEI), a range of user stations (in a GSM-type system, by specifying a range of IMEIs), and/or a type of user station (in a GSM-type system, by specifying a type approval code (TAC) contained in the IMEI). This allows significant flexibility in the specification of user stations which may be used in combination with a removable data store.

In accordance with a further aspect of the invention there is provided a removable data store for insertion into any of a plurality of user stations in a subscriber system, and said store comprising: a memory portion holding data defining a set of user stations which are intended for use in combination with said removable data store; and means for monitoring the identity of a user station in which said removable data store is inserted; characterised by the memory portion being adapted to hold data defining a plurality of user stations which are intended for use in combination with said removable data store, said memory portion holding data defining a set of two or more such user stations, means for altering the operative state of said removable data store in response to said monitoring means recognising that the user station into which the removable data store is inserted is not in said set of two or more user stations, wherein upon being altered the removable data store prevents the user station being used to obtain normal service in said system.

This aspect of the invention provides a removable data store having functionality allowing the identities of two or more user stations to be specified for which the data store will provide a given operative state. The altered operative state may, for example, provide a limited service in the network, if it is preferred that the data store is not used in combination with the user station into which it is inserted.

Preferably the method includes modifying said defining data to identify at least one further mobile station which is intended for use with said data store.

This aspect provides a mechanism whereby a set of user stations with which a particular data store is intended to be used may be updated. For example, it may be determined that the user station currently being used is acceptable to the system operator, even though it was not originally intended for use in combination with the data store in question.

Advantageously embodiments of the invention allow a set of two or more user stations to be positively identified, and the operative state of the data store to be altered if the data store is inserted into a different user station, when that different user station is not one of the positively identified user stations intended for use with the data store.

Other features and advantages of the invention will become clear from the following description of particular embodiments of the invention, in which reference is made to the accompanying drawings, wherein:
Figure 1 is a block diagram schematically illustrating a cellular mobile radio communications system;
Figure 2 is a block diagram schematically illustrating a mobile station used in the system of Figure 1;
Figures 3 to 5 illustrate data records held in a SIM in accordance with embodiments of the present invention; and
Figure 6 is a flow diagram illustrating procedures carried out in accordance with the present invention.

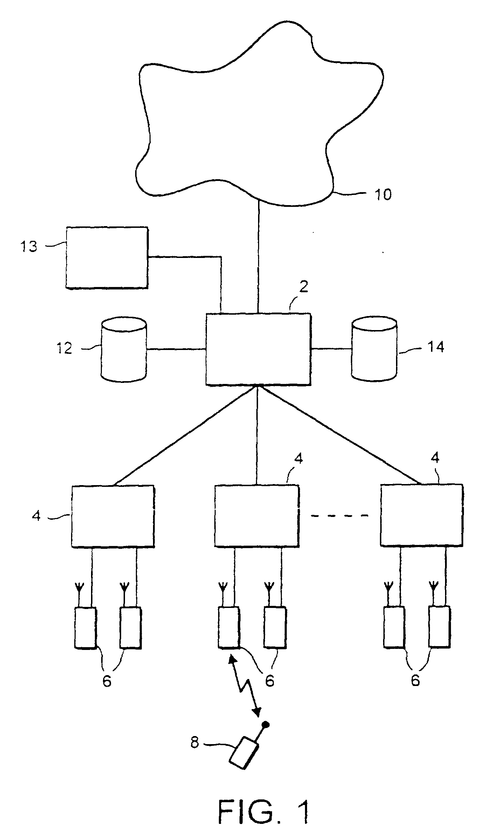

A GSM network, referred to as a public land mobile network (PLMN), is schematically illustrated in Figure 1. This is in itself known and will not be described in detail. A mobile switching centre (MSC) 2 is connected via communication links to a number of base station controller (BSCs) 4. The BSCs 4 are dispersed geographically across areas served by the mobile switching centre 2. Each BSC 4 controls one or more base transceiver stations (BTSs) 6 located remote from, and connected by further communication links to, the BSC. Each BTS 6 transmits radio signals to, and receives radio signals from, mobile stations 8 which are in an area served by that BTS. That area is referred to as a "cell". A GSM network is provided with a large number of such cells, which are ideally contiguous to provide continuous coverage over the whole network territory.

A mobile switching centre 2 is also connected via communications links to other mobile switching centres in the remainder of the mobile communications network 10, and to other networks such as a public service telephone network (PSTN), which is not illustrated. The mobile switching centre 2 is provided with a home location register (HLR) 12 which is a database storing subscriber authentication data including the international mobile subscriber identity (IMSI) which is stored in, and unique to, each SIM.

The mobile switching centre is also provided with a visitor location register (VLR), not shown in Fig. 1, which is a database temporarily storing subscriber authentication data for mobile stations active in its area.

In addition, the mobile network contains a short message service centre (SMC) 13, which is adapted to transmit both conventional GSM-type short message service (SMS) messages to selected mobile stations, and to transmit remote SIM updating (RSU) SMS messages to selected mobile stations (as described in European Patent Application No. 0562890).

Furthermore, in accordance with the present invention, the network is provided with an IMEI/IMSI register (IIR) 14, which is a database holding a list of IMSIs belonging to SIMs associated with the network, and against each IMSI record, a record of the IMEI of the user station in which the SIM was last known to be inserted.

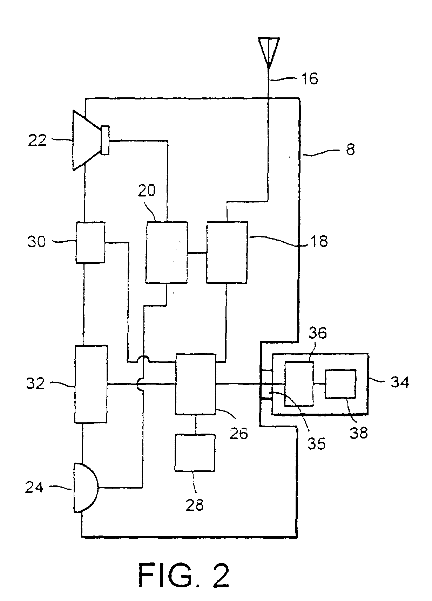

Referring to Figure 2, a mobile station 8 comprises a transmit/receive aerial 16, a radio frequency transceiver 18, a speech coder/decoder 20 connected to a loudspeaker 22 and a microphone 24, a processor circuit 26 and its associated memory 28, an LCD display 30 and a manual input port (keypad) 32. The mobile station is connected to a removable SIM 34 via electrical contacts 35. The International Mobile Equipment Identified (IMEI) is stored in a non-volatile portion of the mobile station memory 28.

The SIM 34 connected to the mobile station has a SIM processor 36, for example a Hitachi H8 ™ microprocessor, and SIM memory 38, which includes for example 16 kilobytes of mask-programmed ROM containing the SIM operating system, 8 kilobytes of read/write EEPROM for the non-volative storage of data items and 256 bytes of RAM for use by the SIM processor 36 during operations.

At present, two physical formats of SIM are specified by the GSM and ISO standards. The first is referred to as an ID-1 SIM, which is a removable smart card complying with the ISO 7816 standard and being of similar dimensions to that of a conventional credit card. The second is referred to as a plug-in SIM, which is a smart card of the same thickness as the ID-1 SIM, but only measuring 25 millimetres in length and 15 millimetres in width.

As described above, the SIM 34 is used for the storage and retrieval of data items by the processor 26 of the mobile station 8. The command set, data file structure and data coding format for data communicated via the interface between the mobile station processor 26 and the SIM processor 36 are all specified, in the GSM system, in GSM technical specification 11.11.

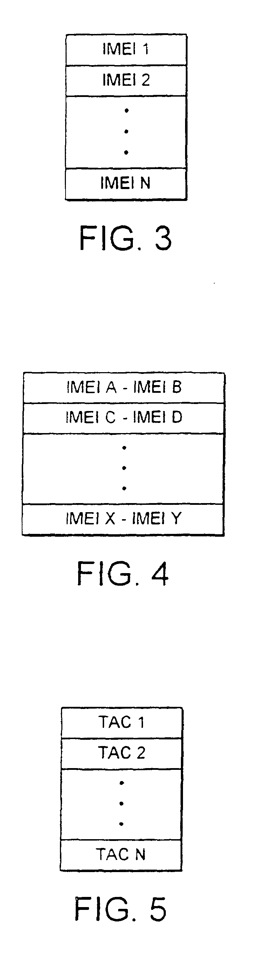

Fig. 3 illustrates an IMEI set record held in the EEPROM of the SIM memory 38 in accordance with one embodiment of the invention. This IMEI set record holds a list of IMEIs, specifying each IMEI in turn, for user stations with which the SIM 34 is intended to be used.

The IMEI as defined in the GSM specifications, consists of the following elements:
1. a type approval code (TAC) of six digits, which is unique for a particular handset type;
2. a factory code (FAC) of two digits, identifying the final assembly plans for the user station;
3. a serial number of six digits, which is unique for each mobile station of a given type;
4. a check digit of one digit; and
5. for GSM phase 2-type user stations only, a software version code of two digits.

Fig. 4 illustrates an alternative IMEI set record format for specifying the IMEIs of user stations which are intended for use in combination with a particular SIM 34. In this format, a list of ranges of IMEI numbers is given, each entry specifying a lower limit to the IMEI range and a higher limit to the IMEI range.

Fig. 5 illustrates a further alternative IMEI set record format for specifying the IMEIs of user stations which are intended to be used with a SIM 34. In this format, a list of TACs is provided, each entry specifying a particular TAC. This IMEI set record format essentially identifies user stations by their type, in view of the use of the type approval code as a type-specific identifier.

Any of the IMEI set record formats illustrated in Figs. 3 to 5 may be provided in the SIM memory 38 alone or in combination.

The IMEI set record will in practice hold two or more entries, depending on the number of mobile stations 8 which are intended for use with the SIM 34.

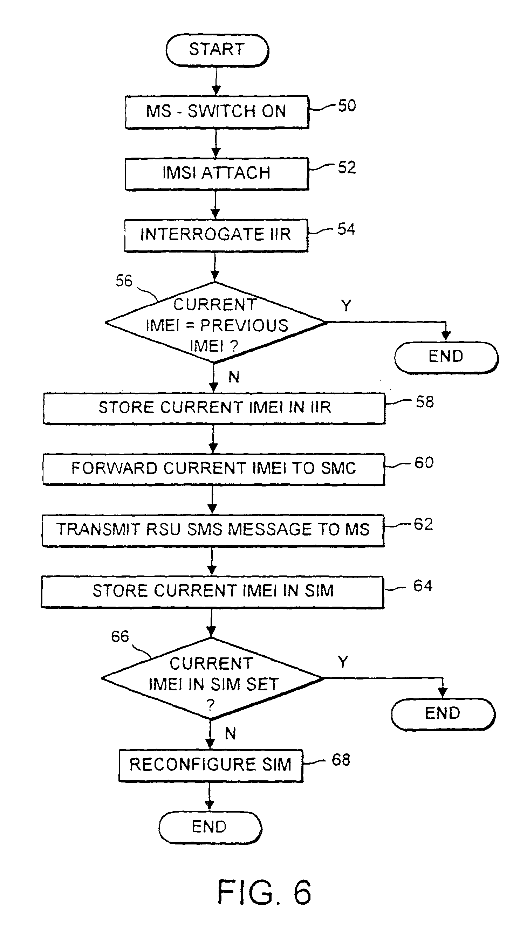

Fig. 6 illustrates an IMEI update procedure performed in accordance with an embodiment of the present invention. The procedure is designed to inhibit the use of a SIM 34 with a user station with which the SIM 34 is not intended to be used.

When the mobile station 8 is switched on, step 50, in a location area in which the mobile station 8 was previously switched off, the mobile station 8 transmits a signal to the network initiating an "IMSI attach" procedure. This IMSI attach procedure, step 52, involves the mobile station 8 transmitting not only a SIM identifier, in this case a temporary mobile subscriber identity (TMSI) of the SIM 34 attached to the mobile station 8, but also the IMEI of the mobile station 8, to the network for checking purposes. As a result of the IMSI attach procedure, a flag in the VLR of the MSC 2 is set to indicate that the mobile station 8 is switched on and able to receive incoming calls.

The MSC 2 then proceeds to interrogate the IIR 14, step 54, to retrieve the IMEI held against the IMSI record for the SIM 34 in question, indicating the last-known IMEI of the mobile station 8 in which the SIM 34 was previously inserted, step 56. If the IMEI currently signalled to the network is the same as the IMEI held previously in the IIR 14, determination step 56, the IMEI update procedure is terminated.

If however the IMEI currently signalled in the network is different to that previously stored in the IIR 14, the MSC 2 proceeds to command the IIR to store the IMEI currently signalled in the network against the record for the IMSI in question, step 58. The MSC 2 then proceeds to forward the current IMEI to the SMC 13, step 60.

On receipt of the current IMEI, the SMC 13 generates a remote SIM updating (RSU) short message service (SMS) message and transmits it, via the MSC 2, a BSC 4, and the serving BTS 6, to the mobile station 8, step 62. This RSU SMS message is as described in EP-A-0562890. The RSU SMS message contains a flag indicating to the SIM processor 36 that the SMS message is an RSU SMS message, and a command addressed to the SIM processor 36 to store the IMEI currently signalled by the mobile station in the network.

On receipt of the current IMEI updating RSU SMS message, the mobile station processor 26 forwards the message, via the interface 35, to the SIM processor 36, for storage as a conventional SMS message. However, because the SMS message contains an RSU flag, the SIM processor 36 does not store the message as a conventional SMS message, but conducts the command included in the RSU message, namely to store the IMEI in the message in a current IMEI record in the SIM memory 38, step 64.

The SIM processor 36 compares the IMEI stored in the current IMEI record with the set of IMEIs specified in the IMEI set data record, step 66.

If the current IMEI appears in the set step 66, no further action is taken in the SIM 34. If however the current IMEI does not appear in the set defined for the SIM 34, step 66, the SIM processor 36 proceeds to self-reconfigure the SIM in accordance with any or all of a number of possible options under the control of the SIM operating system, step 68.

A first option is for the SIM processor 36 to over-write the operator name string stored in a record in the SIM memory 38 with a message indicating to a user that the mobile station 8 was not intended to be used with the SIM 34. This has the effect of the mobile station 8, presenting the message rather than the name of the mobile network operator to a user on the display 30 when the mobile station 8 is switched on.

A second option is for the SIM processor 36 to set a flag in the SIM memory 38 indicating that a "fixed dialling" feature is to be enabled in the mobile station 8. The enablement of this feature effectively prevents the mobile station 8 being used for calling dialling numbers other than one or more dialling numbers held in a fixed dialling number (FDN) list in the SIM memory 38. The SIM processor 36 may also enter a predetermined dialling number in the FDN list, such as a customer services help desk, to allow the SIM/mobile station incompatibility problem to be solved with help from the network operator. If this option is to be employed, the predetermined dialling number may either be preprogrammed in the SIM or included in the RSU SMS message which contains the current IMEI.

A third option is to disable critical data records held in the SIM to prevent che mobile station receiving service in the network. For example, the processor 36 of the SIM in its reconfigured state may prevent access to the authentication key record by the mobile station 8, thereby ensuring that a user of the mobile station 8 cannot be properly authenticated in the network, effectively barring the user from obtaining service in the network. Other critical SIM records may alternatively, or also, be disabled.

A fourth option is to alter the user's PIN number record held in the memory 38 of the SIM 34. This would effectively bar the user utilising the SIM 34, unless the user obtains the new PIN, for example by contacting a customer services help desk. If this option is to be employed, the new PIN may either be preprogrammed in the SIM or included in the RSU SMS message which contains the current IMEI.

Any or all of the above options, and variants thereof, may be used alone or in combination. There may also be some time delay between activation elements of a combination of the options. For example, an initial step taken by the SIM processor 36 may be to overwrite the operator name string held in the SIM memory 38. If after a predetermined delay time the current IMEI has not been updated with an acceptable mobile station 8 (i.e. one identified in the IMEI set record), the SIM 34 may enable the fixed dialling number feature, and/or disable critical SIM records, and/or overwrite a PIN number record.

With the SIM 34 reconfigured as described, the user of the mobile station 8 is either prompted, by means of a message appearing on the display of the user station, or forced, by disablement of one or more the functions of the SIM 34, to contact the network operator in order to solve the SIM/mobile station incompatibility problem. As a result, the network operator can make a decision as to whether the mobile station 8 currently used with the SIM 34, is acceptable or not.

If the new mobile station 8 is acceptable, the network operator retrieves the current IMEI of the mobile station 8 from the IIR 14 and generates a command addressed to the SMC 13 to originate an IMEI set record updating RSU SMS message. This IMEI set record updating RSU SMS message contains a command to the SIM processor 36 to store the current IMEI of the mobile station 8 in the IMEI set record. This RSU SMS message is constructed and sent to the mobile station 8 as described in EP-A-0562890.

On receipt of the IMEI set updating RSU SMS message, the mobile station processor 26 forwards the message, via the interface 35, to the SIM processor, for storage as a conventional SMS message. However, because the SMS message contains an RSU flag, the SIM processor does not store the message as a conventional SMS message, but conducts the command included in the RSU SMS message, namely to add the current IMEI to the IMEI set record. Since the current IMEI then appears in both the current IMEI record and the IMEI set record, the SIM processor 36 reverses the reconfiguration previously undertaken, thus returning the SIM 34 to its normal operative state.

An IMEI set updating RSU SMS message may be transmitted to the SIM 34 by the network operator at any time in order to add, or delete, one or more IMEIs from the IMEI set record. This alters the set of mobile stations 8 which are intended for use with the SIM 34. This may be required, for example, if the subscriber notifies the network operator of an imminent change of mobile station 8 to be used with the SIM 34. Alternatively, the network operator can originate an IMEI set updating RSU SMS message, in the case of the SIM 34 being originally intended for use with one or more ranges, or type, of mobile stations, when additional ranges or types of mobile stations 8 are introduced which are acceptable for use with the SIM 34.

Possible modifications and variations of the above-described embodiments are envisaged.

In accordance with functionality defined for the SIM 34 in the embodiments described, the SIM processor 36 is not able to interrogate the memory 28 of the mobile station 8 directly in order to ascertain the IMEI of the mobile station 8. However, with an alternative SIM/mobile station functionality, the SIM processor 36 may interrogate the mobile station processor 26 to retrieve the IMEI mobile station memory 28 directly. The SIM 34 could then self-reconfigure automatically without the need for the issuance of a notification of the current IMEI via the network.

Alternatively, it is not necessary for the records defining a set of IMEIs which are intended for use in combination with a SIM to be held in the SIM memory 38. For example, such records defining sets of IMEIs allocated to different SIMs may be held in the IIR 14 in the network. When the network is informed of the current IMEI associated with a SIM 34, the MSC 2 can ascertain, with reference to the set defined for the SIM 34 in the IIR 14, whether or not the mobile station 8 into which the SIM 34 has been inserted is a member of the allocated set. If not, the MSC 2 can originate an RSU SMS message, to be sent via the SMC 13, which has the effect of reconfiguring the SIM 34, using any of the options previously suggested. For example, an RSU SMS message may then be sent to the mobile station commanding the SIM processor 36 to overwrite the operator name string held in the SIM memory 38, to enable an FDN feature by setting a flag in the SIM memory 38, to disable a critical SIM record, and/or to alter a PIN number record in the SIM memory 38.

Furthermore, although in the above-described embodiment the IMSI attach procedure is used in order to inform the network of the IMEI of the mobile station into which the SIM 34 is currently inserted, other suitable signalling procedures carried out over the radio interface between the mobile station 8 and the network may be used to ascertain the IMEI of the mobile station 8. For example, the IMEI may be signalled from the mobile station 8 during a location updating procedure, during authentication procedures, etc.

The present invention may be particularly advantageously utilised in relation to a SIM which is designed for use with a particular type of compatible mobile station as indicated by the TAC in the mobile station's IMEI. For example, the mobile station 8 may be provided with a particular functional feature, the SIM 34 having data fields for use by the mobile station 8 for realising that feature. The present invention allow the SIM 34 to be reconfigured when used in a mobile station 8 which is not of the type with which the SIM 34 was intended to be used. Rather than disabling the current mobile station 8 in a particular manner, the SIM 34 may be reconfigured to suppress or alter the functionality associated with the feature which is not provided on the current mobile station 8.

Finally, although the present invention has been described in relation to a GSM-type network (i.e. GSM networks and variants thereof, such as a DCS 1800 network), the invention may also be realised in other types of mobile communications networks, whether using TDMA, CDMA, or other radio interface protocols, and in other types of subscriber systems utilising removable data stores such as smart cards.

It will be appreciated that further modifications and variations may be employed without departing from the scope of the present invention.

## Claims

1. A method of operating user stations (8) in a subscriber system, said method comprising:
providing a subscriber with a removable data store (34) which is for insertion into any of a plurality of user stations, said removable data store assuming a first operative state, and
monitoring with said removable data store the identity of a user station in which said removable data store is currently inserted,
**characterised by** said removable data store being adapted to store data defining a plurality of user stations that are intended for use in combination with said removable data store; and
arranging said removable data store to store data defining a set of two or more user stations which are intended for use in combination with said removable data store;
wherein said removable data store reconfigures (68) itself into a second operative state in response to said removable data store recognising that the user station in which the removable data store is inserted is not a member of said set defined for the removable data store, said reconfiguring step preventing said user station being used to obtain normal service in said system.

2. A method according to claim 1, wherein said step of reconfiguring includes the removable data store altering data held in a memory portion in said removable data store, said memory portion being for holding data necessary to a user to obtain normal service in said system.

3. A method according to claim 2, wherein said memory portion is for holding an operator name string.

4. A method according to claim 2, wherein said memory portion is for enabling a feature preventing said user station being used to call any dialling number other than one or more predetermined dialling numbers.

5. A method according to claim 2, wherein said memory portion is for holding a user validation code such as a PIN number.

6. A method according to any preceding claim, wherein said current user station is of a type approved for use in said system.

7. A method according to any preceding claim, wherein said defining data identifies individual user station identities.

8. A method according to any preceding claim, wherein said defining data identifies a range of user station identities.

9. A method according to any preceding claim, wherein said defining data identifies an identity of a type of user station.

10. A method according to any preceding claim, comprising transmitting (60, 62) a message to said user station via a radio interface, said message comprising data indicating the identity of said current user station, said current user station forwarding said message to said removable data store.

11. A method according to any preceding claim, further comprising the step of modifying (64) said defining data.

12. A method according to claim 11, wherein said modifying step comprises transmitting a message to said user station via a radio interface.

13. A method according to claim 11 or 12, further comprising returning said removable data store to the first operative state as a consequence of said modifying step.

14. A removable data store (34) for insertion into any of a plurality of user stations (8) in a subscriber system, and said store comprising:
a memory portion (38) holding data defining a set of user stations which are intended for use in combination with said removable data store; and
means for monitoring the identity of a user station in which said removable data store is inserted;
**characterised by** the memory portion being adapted to hold data defining a plurality of user stations which are intended for use in combination with said removable data store, said memory portion holding data defining a set of two or more such user stations,
means for altering the operative state of said removable data store in response to said monitoring means recognising that the user station into which the removable data store is inserted is not in said set of two or more user stations,
wherein upon being altered the removable data store prevents the user station being used to obtain normal service in said system.

15. A removable data store according to claim 14, adapted to perform the method of any of claims 2 to 9.

16. A removable data store according to claim 14 or 15, in the form of a subscriber identity module for use in a GSM-type mobile communications system.

## Patentansprüche

1. Verfahren zum Betreiben von Benutzerstationen (8) in einem Teilnehmersystem, wobei das Verfahren Folgendes umfaßt:
Versehen eines Teilnehmers mit einem entfernbaren Datenspeicher (34), der dazu dient, in eine beliebige von mehreren Benutzerstationen eingesetzt zu werden, wobei der entfernbare Datenspeicher einen ersten betrieblichen Zustand annimmt, und
Überwachen der Identität einer Benutzerstation, in die der entfernbare Datenspeicher gegenwärtig eingesetzt ist, mit dem entfernbaren Datenspeicher,
**dadurch gekennzeichnet, daß**
der entfernbare Datenspeicher dazu geeignet ist, Daten zu speichern, die mehrere Benutzerstationen definieren, welche zur Verwendung in Kombination mit dem entfernbaren Datenspeicher bestimmt sind; und
Einrichten des entfernbaren Datenspeichers, um Daten zu speichern, die einen Satz von zwei oder mehr Benutzerstationen definieren, die zur Verwendung in Kombination mit dem entfernbaren Datenspeicher bestimmt sind;
wobei sich der entfernbare Datenspeicher als Reaktion auf das Erkennen durch den entfernbaren Datenspeicher, daß die Benutzerstation, in die der entfernbare Datenspeicher eingesetzt ist, kein Mitglied des für den entfernbaren Datenspeicher definierten Satzes ist, selbst rekonfiguriert (68), wobei der Rekonfigurierungsschritt verhindert, daß die Benutzerstation verwendet wird, um in diesem System einen normalen Dienst zu erhalten.

2. Verfahren nach Anspruch 1, wobei der Rekonfigurierungsschritt das Verändern von Daten, die in einem Speicherteil im entfernbaren Datenspeicher gehalten werden, durch den entfernbaren Datenspeicher beinhaltet, wobei der Speicherteil dazu dient, Daten zu halten, die für einen Benutzer nötig sind, um in diesem System einen normalen Dienst zu erhalten.

3. Verfahren nach Anspruch 2, wobei der Speicherteil dazu dient, eine Zeichenkette des Betreibernamens zu halten.

4. Verfahren nach Anspruch 2, wobei der Speicherteil dazu dient, eine Funktion zu ermöglichen, die verhindert, daß die Benutzerstation jedwede andere Wählnummer als eine oder mehrere vorbestimmte Wählnummern anruft.

5. Verfahren nach Anspruch 2, wobei der Speicherteil dazu dient, einen Benutzergültigkeitsprüfungscode wie etwa eine PIN-Nummer zu halten.

6. Verfahren nach einem der vorhergehenden Ansprüche, wobei die gegenwärtige Benutzerstation von einer Art ist, die zur Verwendung im System genehmigt ist.

7. Verfahren nach einem der vorhergehenden Ansprüche, wobei die definierenden Daten einzelne Benutzerstationsidentitäten identifizieren.

8. Verfahren nach einem der vorhergehenden Ansprüche, wobei die definierenden Daten einen Bereich von Benutzerstationsidentitäten identifizieren.

9. Verfahren nach einem der vorhergehenden Ansprüche, wobei die definierenden Daten eine Identität einer Art von Benutzerstation identifizieren.

10. Verfahren nach einem der vorhergehenden Ansprüche, umfassend das Senden (60, 62) einer Nachricht über eine Funkschnittstelle zur Benutzerstation, wobei die Nachricht Daten umfaßt, die die Identität der gegenwärtigen Benutzerstation angeben, wobei die gegenwärtige Benutzerstation die Nachricht zum entfernbaren Datenspeicher weiterleitet.

11. Verfahren nach einem der vorhergehenden Ansprüche, ferner umfassend den Schritt des Abänderns (64) der definierenden Daten.

12. Verfahren nach Anspruch 11, wobei der Abänderungsschritt das Senden einer Nachricht über. eine Funkschnittstelle zur Benutzerstation umfaßt.

13. Verfahren nach Anspruch 11 oder 12, ferner umfassend das Zurückführen des entfernbaren Datenspeichers als Reaktion auf den Abänderungsschritt in den ersten betrieblichen Zustand.

14. Entfernbarer Datenspeicher (34) zum Einsetzen in eine beliebige von mehreren Benutzerstationen (8) in einem Teilnehmersystem, wobei der Speicher Folgendes umfaßt:
einen Speicherteil (38), der Daten hält, die einen Satz von Benutzerstationen definieren, die zur Verwendung in Kombination mit dem entfernbaren Datenspeicher bestimmt sind; und
ein Mittel zum Überwachen der Identität einer Benutzerstation, in die der entfernbare Datenspeicher eingesetzt ist,
**gekennzeichnet durch**
die Eignung des Speicherteiles, Daten zu halten, die mehrere Benutzerstationen definieren, die zur Verwendung in Kombination mit dem entfernbaren Datenspeicher bestimmt sind, wobei der Speicherteil Daten hält, die einen Satz von zwei oder mehr derartigen Benutzerstationen definieren,
ein Mittel zum Abändern des betrieblichen Zustands des entfernbaren Datenspeichers als Reaktion darauf, daß das Überwachungsmittel erkennt, daß sich die Benutzerstation, in die der entfernbare Datenspeicher eingesetzt ist, nicht im Satz von zwei oder mehr Benutzerstationen befindet, wobei der entfernbare Datenspeicher nach dem Abändern verhindert, daß die Benutzerstation verwendet wird, um in diesem System einen normalen Dienst zu erhalten.

15. Entfernbarer Datenspeicher nach Anspruch 14, der dazu geeignet ist, das Verfahren nach einem der Ansprüche 2 bis 9 durchzuführen.

16. Entfernbarer Datenspeicher nach Anspruch 14 oder 15 in der Form eines Teilnehmeridentitätsmoduls zur Verwendung in einem Mobilkommunikationssystem vom GSM-Typ.

## Revendications

1. Une méthode pour faire fonctionner des stations utilisateur (8) dans un système d'abonnés, ladite méthode comprenant:
fournir à un abonné une mémoire de données amovible (34) qui est à insérer dans l'une quelconque d'un certain nombre de stations utilisateur, ladite mémoire de données amovible adoptant un premier état de fonctionnement, et
contrôler avec ladite mémoire de données amovible l'identité d'une station utilisateur dans laquelle ladite mémoire de données amovible est actuellement insérée,
**caractérisée par** ladite mémoire de données amovible étant adaptée pour stocker des données définissant un certain nombre de stations utilisateur qui sont destinées à être utilisées en association avec ladite mémoire de données amovible; et
configurer ladite mémoire de données amovible pour stocker des données définissant un groupe d'au moins deux stations utilisateur qui sont destinées à être utilisées en association avec ladite mémoire de données amovible;
dans laquelle ladite mémoire de données amovible se reconfigure (68) dans un second état de fonctionnement en réponse à ladite mémoire de données amovible reconnaissant que la station utilisateur dans laquelle ladite mémoire de données amovible est insérée n'est pas un membre dudit groupe défini pour la mémoire de données amovible, ladite étape de reconfiguration empêchant l'utilisation de ladite station utilisateur pour obtenir un service normal dans ledit système.

2. Une méthode selon la revendication 1, dans laquelle ladite étape de reconfiguration comprend la mémoire de données amovible modifiant les données contenues dans une partie de la mémoire dans ladite mémoire de données amovible, ladite partie de mémoire étant destinée à contenir des données nécessaire à un utilisateur pour obtenir un service normal dans ledit système.

3. Une méthode selon la revendication 2, dans laquelle ladite partie de mémoire est destinée à contenir une chaîne d'un nom d'opérateur.

4. Une méthode selon la revendication 2, dans laquelle ladite partie de mémoire est destinée à permettre une caractéristique empêchant ladite station utilisateur d'être utilisée pour appeler un numéro d'appel quelconque autre qu'un ou plusieurs numéro(s) d'appel prédéterminé(s).

5. Une méthode selon la revendication 2, dans laquelle ladite partie de mémoire est destinée à contenir un code de validation d'utilisateur tel qu'un numéro PIN.

6. Une méthode selon l'une quelconque des revendications précédentes, dans laquelle la station utilisateur actuelle est d'un type approuvé pour une utilisation dans ledit système.

7. Une méthode selon l'une quelconque des revendications précédentes, dans laquelle lesdites données de définition identifient les identités individuelles de station utilisateur.

8. Une méthode selon l'une quelconque des revendications précédentes, dans laquelle lesdites données de définition identifient un champ d'identités de station utilisateur.

9. Une méthode selon l'une quelconque des revendications précédentes, dans laquelle lesdites données de définition identifient une identité d'un type de station utilisateur.

10. Une méthode selon l'une quelconque des revendications précédentes, comprenant la transmission (60, 62) d'un message vers ladite station utilisateur par l'intermédiaire d'un interface radio, ledit message comprenant des données indiquant l'identité de ladite station utilisateur actuelle, ladite station utilisateur actuelle faisant suivre ledit message à ladite mémoire de données amovible.

11. Une méthode selon l'une quelconque des revendications précédentes, comprenant en outre l'étape de modification (64) desdites données de définition.

12. Une méthode selon la revendication 11, dans laquelle l'étape de modification comprend la transmission d'un message vers ladite station utilisateur par l'intermédiaire d'un interface radio.

13. Une méthode selon la revendication 11 ou 12, comprenant en outre le retour de ladite mémoire de données amovible au premier état de fonctionnement suite à ladite étape de modification.

14. Une mémoire de données amovible (34) destinée à être insérée dans l'une quelconque parmi un certain nombre de stations utilisateur (8) dans un système d'abonnés, et ladite mémoire comprenant:
une partie de mémoire (38) contenant des données définissant un groupe de stations utilisateur qui sont destinées à être utilisées en association avec ladite mémoire de données amovible; et
des moyens pour contrôler l'identité d'une station utilisateur dans laquelle ladite mémoire de données amovible est inserée;
**caractérisée par** la partie de mémoire étant adaptée pour stocker des données définissant un certain nombre de stations utilisateur qui sont destinées à être utilisées en association avec ladite mémoire de données amovible, ladite partie de mémoire contenant des données définissant un groupe d'au moins deux stations utilisateur,
des moyens pour modifier l'état de fonctionnement de ladite mémoire de données amovible en réponse auxdits moyens de contrôle reconnaissant que la station utilisateur dans laquelle la mémoire de données amovible est inserée n'est pas dans ledit groupe d'au moins deux stations utilisateur, dans lequel en étant modifiée la mémoire de données amovible empêche la station utilisateur d'être utilisée pour obtenir un service normal dans ledit système.

15. Une mémoire de données amovible selon la revendication 14, adaptée pour conduire la méthode d'une quelconque des revendications 2 à 9.

16. Une mémoire de données amovible selon la revendication 14 ou 15, ayant la forme d'un module d'identité d'abonné pour une utilisation dans un système de communication mobile de type GSM.
